# EUROPÄISCHE PATENTSCHRIFT

(11) **EP 1 712 414 B1**
(45) Veröffentlichungstag und Bekanntmachung des Hinweises auf die Patenterteilung: **05.05.2010**
(21) Anmeldenummer: 05107224.7
(22) Anmeldetag: 05.08.2005
(51) Int. Cl.: B60P 3/22, E03F 7/10, B65H 75/44

(54) **Saug-Spülfahrzeug, insbesondere für die Kanalreinigung**
Gulley cleaning vehicle
Véhicule pour le nettoyage de canalisations d'égouts

(30) Priorität: 15.04.2005 DE 102005017441
(43) Veröffentlichungstag der Anmeldung: 18.10.2006
(73) Patentinhaber: Müller Umwelttechnik GmbH & Co. KG, 32816 Schieder-Schwalenberg (DE)
(72) Erfinder: Müller, Wolfgang, 32816, Schieder-Schwalenberg (DE)
(74) Vertreter: Dantz, Jan Henning

(56) Entgegenhaltungen:
- EP-A2- 0 995 848
- DE-A1- 2 948 780
- DE-A1- 3 922 400
- DE-A1- 10 246 041

## Beschreibung

Die vorliegende Erfindung betrifft ein Saug-Spülfahrzeug, insbesondere zur Kanalreinigung, mit einem Saugschlauch zum Fördern von Verunreinigungen in einen Behälter und einem Spülschlauch zum Einspritzen eines Fluides und Lösen der Verunreinigungen, wobei rückseitig an dem Fahrzeug ein Ausleger zur Führung des Saugschlauches und des Spülschlauches vorgesehen ist, der sich um eine vertikale Achse verschwenken lässt.

Aus der DE 39 22 400 ist eine Verschiebeführung für eine Schlauchhaspel bekannt, die an der Rückseite eines Reinigungsfahrzeuges montiert ist. Die Führung der Schlauchhaspel umfasst rückseitig an einem Behälter angeordnete Schienen, an denen Rollen geführt sind, sodass die Schlauchhaspel sowohl verfahrbar als auch verschwenkbar ist. Bei diesem Fahrzeug ist jedoch kein Ausleger für den Spülschlauch vorgesehen, um diesen in die vom Benutzer gewünschte Position bringen zu können. Zudem fehlt es an einem Saugschlauch, mittels dem die Verunreinigungen abgesaugt werden können, sodass dieses Fahrzeug für die Kanalreinigung schlecht einsetzbar ist.

Aus der gattungsgemäßen DE 102 46 041 ist ein Saug-Spülfahrzeug bekannt, bei dem ein Saugschlauch und ein Spülschlauch über einen Ausleger geführt sind, der rückseitig am Fahrzeug in einer Richtung im Wesentlichen senkrecht zur Fahrzeuglängsebene angeordnet ist. Der Ausleger kann zusammen mit den Enden des Saugschlauches und des Spülschlauches um eine vertikale Achse verschwenkt werden, damit die Schläuche in einen Kanalschacht an der erforderlichen Position abgelassen werden können. Zwar ist die gemeinsame Führung des Saugschlauches und des Spülschlauches über den rückseitig angeordneten Ausleger eine Erleichterung der Bedienung, es besteht jedoch der Nachteil, dass der Schwenkbereich und damit der Arbeitsbereich des Auslegers begrenzt ist. Zudem gibt es unmittelbar im Bereich des Fahrzeuges Zonen, die zum Ablassen der Schläuche über den Ausleger nicht anfahrbar sind.

Es ist daher Aufgabe der vorliegenden Erfindung ein Saug-Spülfahrzeug zu schaffen, das einen Ausleger mit einem großen Arbeitsbereich aufweist.

Diese Aufgabe wird mit einem Saug-Spülfahrzeug mit den Merkmalen des Anspruches 1 gelöst.

Erfindungsgemäß ist der Ausleger des Saug-Spülfahrzeuges an einem Schlitten entlang bogenförmiger Schienen verfahrbar und besitzt einen Schwenkbereich von über 180 °. Dadurch kann benachbart zu dem Fahrzeug über den Ausleger ein besonders großer Arbeitsbereich abgedeckt werden. Durch den verfahrbaren Schlitten können auch die Bereiche unmittelbar benachbart zu der Rückseite des Fahrzeuges angefahren werden, wobei die Enden des Spülschlauches und des Saugschlauches dann in entsprechende Schächte abgelassen werden können. Ferner ist es möglich, auch entfernt liegende Positionen anzufahren, da der Ausleger entlang der bogenförmigen Schienen über den Schlitten verfahrbar ist und zudem über das Verschwenken des Auslegers rückseitig an dem Fahrzeug ein im Wesentlichen symmetrischer segmentförmiger Arbeitsbereich anfahrbar ist. Dies erleichtert die Bedienung, da das Fahrzeug je nach Abstellmöglichkeit geparkt werden kann, und dann kleinere Wege über die Bewegung des Auslegers abgefahren werden können. Vorzugsweise ist dabei der Schwenkbereich des Auslegers größer als 220 °, sodass auch Öffnungen angefahren werden können, die vor der Rückseite des Fahrzeuges liegen.

Die bogenförmigen Schienen erstrecken sich bevorzugt über einen Winkel von über 30 °, vorzugsweise über 60 °, sodass der Schlitten einen Bogenbereich über die Schienen abfahren kann und der Ausleger dann schon in einer Winkelstellung des Schlittens zusätzlich verschwenkt wird.

Gemäß einer weiteren Ausgestaltung der Erfmdung ist die vertikale Achse des Auslegers im Bereich einer Mittelebene des Auslegers angeordnet. Dadurch kann die vertikale Achse in geringem Abstand zu den bogenförmigen Schienen angeordnet sein, was günstige Hebelverhältnisse ergibt. Zudem lässt sich ein großer Schwenkbereich realisieren, wobei der Ausleger für den Transport mit einer Mittelebene im Wesentlichen senkrecht zu einer Fahrzeuglängsebene angeordnet werden kann. Dabei kann die Achse des Auslegers wahlweise auf einer Seite der Fahrzeuglängsebene angeordnet sein, also eine Seite des Auslegers kann wahlweise vorne oder hinten angeordnet sein.

Vorzugsweise ist an dem Ausleger ein Antrieb vorgesehen, mittels dem der Schlitten entlang der Schiene verfahrbar ist. Der Antrieb kann ein antreibbares Zahnrad umfassen, das an einer benachbart zu der Schiene angeordneten gebogenen Zahnstange eingreift.

Der Schlitten kann über eine Gleitführung an der Schiene bewegbar sein, wobei alternativ auch Rollen an dem Schlitten vorgesehen sein können, die an der Schiene verfahrbar sind.

Zur Fixierung des Auslegers für den Transport kann eine Festlegung dadurch erfolgen, dass in einem Motor des Schwenkantriebes für den Ausleger eine Lamellenbremse vorgesehen ist. Auch andere Befestigungsmittel können vorgesehen sein.

An dem Ausleger ist vorzugsweise eine Haspel zum Aufwickeln des Spülschlauches montiert, sodass Ausleger und Haspelbock an einem gemeinsamen Rahmen angeordnet sind, was einen kompakten Aufbau ermöglicht.

Der Ausleger kann ferner teleskopierbar ausgebildet sein und ein ausfahrbares Führungsteil besitzen, sodass ein besonders großer Radius durch den Ausleger abgedeckt werden kann.

Die Erfindung wird nachfolgend anhand eines Ausführungsbeispieles mit Bezug auf die beigefügten Zeichnungen näher erläutert. Es zeigen:

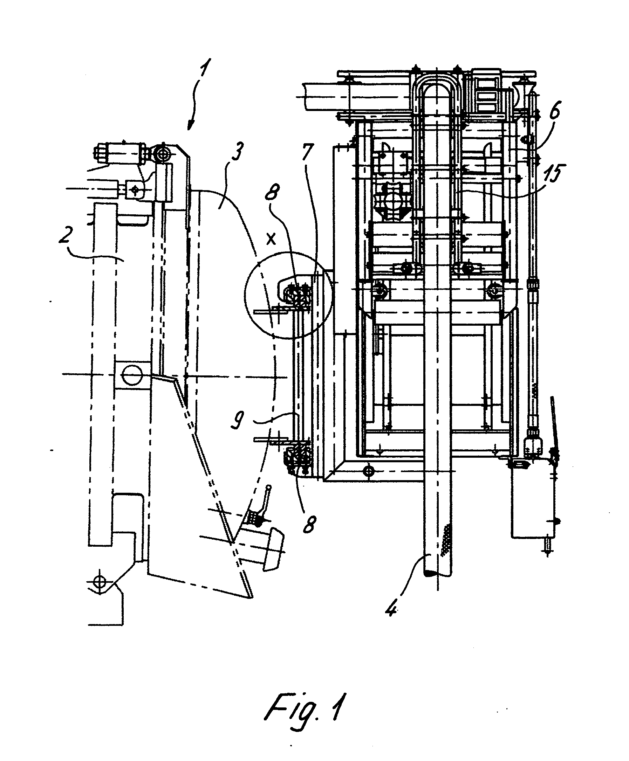

- Figur 1: eine Seitenansicht eines erfindungsgemäßen Saug-Spülfahrzeuges im rückseitigen Bereich;
- Figur 2: eine Detailansicht der Führung des Schlittens;
- Figur 3: eine Draufsicht auf den rückseitigen Bereich des Saug-Spülfahrzeuges mit unterschiedlichen Positionen des Auslegers;
- Figur 4: eine Draufsicht auf den rückseitigen Bereich des Saug-Spülfahrzeuges, und
- Figur 5: eine Rückansicht des Auslegers des Saug-Spülfahrzeuges.

Ein Saug-Spülfahrzeug 1 umfasst einen Behälter 2, in den Verunreinigungen, beispielsweise Schlamm, abgesaugt werden kann und der ein Wasserreservoir zur Versorgung eines Spülschlauches enthalten kann.

Rückseitig an dem Fahrzeug ist ein Deckel 3 zum Verschließen des Behälters 2 vorgesehen, an dem ein Gestell 6 montiert ist, das über einen Schlitten 7 an Schienen 8 geführt ist. Die Schienen 8 sind an dem Deckel 3 befestigt, wobei zwei Schienen 8 vorgesehen sind, die über Streben 9 miteinander verbunden sind und einen gewissen vertikalen Abstand aufweisen. Gleichermaßen ist der Schlitten 7 an den Schienen 8 bewegbar gehalten.

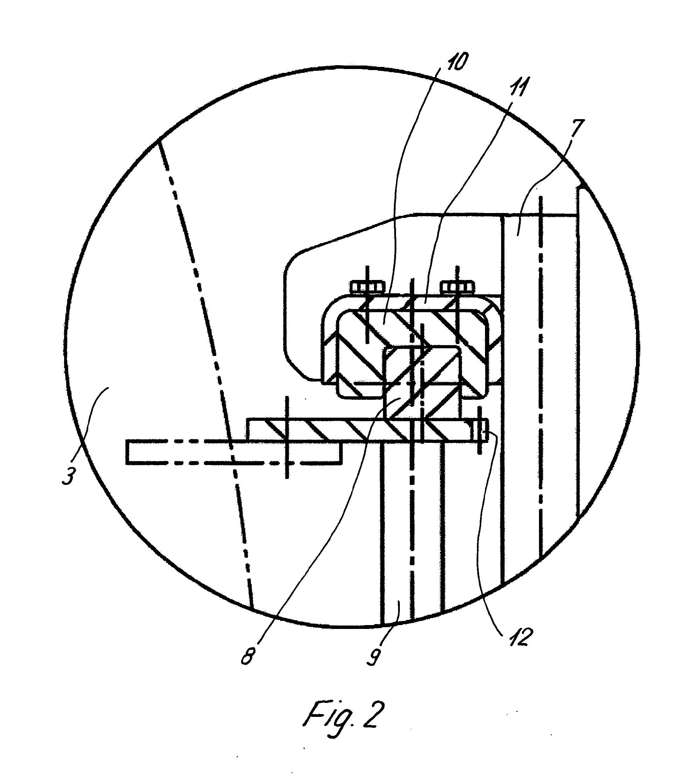

Wie aus Figur 2 ersichtlich ist, besitzt der Schlitten 7 einen U-förmigen Gleitschuh 10, der die Schiene 8 umgreift, wobei die untere Schiene 8 gleichermaßen von einem Gleitschuh 10 umgriffen ist. Um den Gleitschuh 10 ist ein Metallprofil 11 vorgesehen, das mit dem Schlitten 7 verbunden ist. Zum Antrieb des Schlittens 7 ist eine gebogene Zahnstange 12 benachbart zu der oberen Schiene 8 montiert, die mit einem Zahnrad kämmt, das durch einen am Schlitten 7 montierten Motor antreibbar ist.

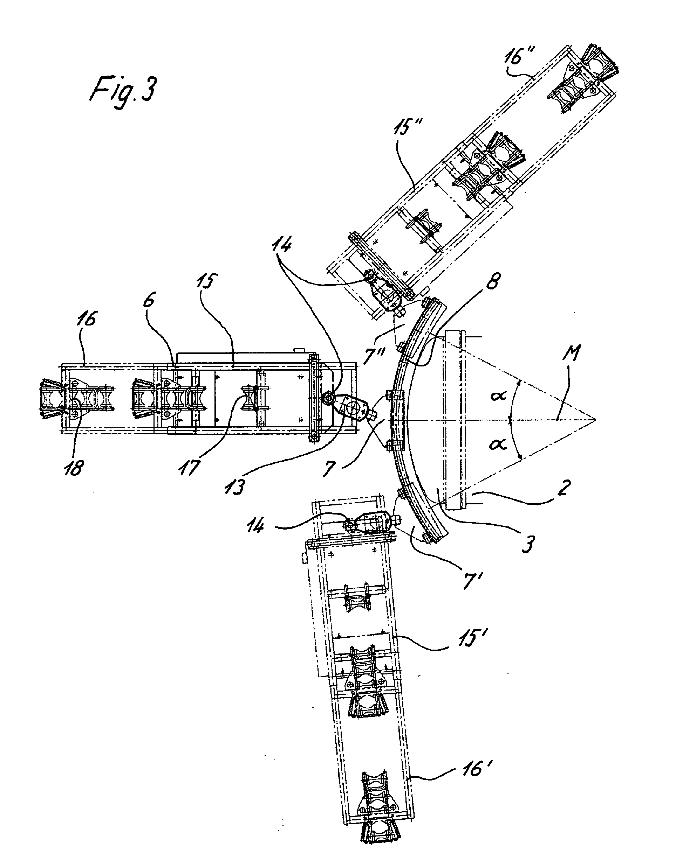

In Figur 3 sind unterschiedliche Stellungen des Gestells 6 des Auslegers 15 ohne einen Saugschlauch 4 und einen Spülschlauch 5 gezeigt. Der Schlitten 7 ist entlang der bogenförmig ausgebildeten Schienen 8 verfahrbar, wobei der Schlitten 7 einen Haltearm 13 umfasst, an dem eine vertikale Achse 14 zum Verschwenken des Auslegers 15 vorgesehen ist. Der Ausleger 15 umfasst einen stationären Teil, der Führungsrollen 17 für den Saugschlauch 4 besitzt. Ferner ist an dem Ausleger 15 ein ausfahrbares Führungsteil 16 angeordnet, das teleskopierbar ist und weitere Führungsrollen 18 für den Saugschlauch 4 und den Spülschlauch 5 besitzt, damit diese parallel in einen Kanalschacht abgelassen werden können.

Der Schlitten 7 kann in eine untere Position 7' verfahren werden, sodass der Ausleger schon auf einer Seite des Fahrzeuges angeordnet ist. Wird dieser nun zudem um die Achse 14 nach unten verschwenkt, sodass Ausleger 15' und Führungsteil 16' die gezeigte Position einnehmen, können auch Schächte angefahren werden, die vergleichsweise weit entfernt liegen, wobei aufgrund der bogenförmigen Anordnung der Schienen 8 der Schwenkbereich des Auslegers 15 größer als 180 ° ist. An einer Fahrzeuglängsebene M kann der Schlitten 7 in zwei Endpositionen 7' und 7" verfahren werden, die in einem Winkel zu der Fahrzeuglängsebene M angeordnet sein kann, wobei der Winkel beispielsweise in einem Bereich zwischen 20 und 40 °, vorzugsweise etwa 30 ° liegt. Dadurch ergibt sich ein maximaler Schwenkbereich des Auslegers 15 von vorzugsweise über 220 °, wobei der Ausleger in der oben gezeigten Position 15" mit dem Führungsteil 16" deutlich weiter vorne angeordnet sein kann als der rückseitige Abschluss des Fahrzeuges am Deckel 3.

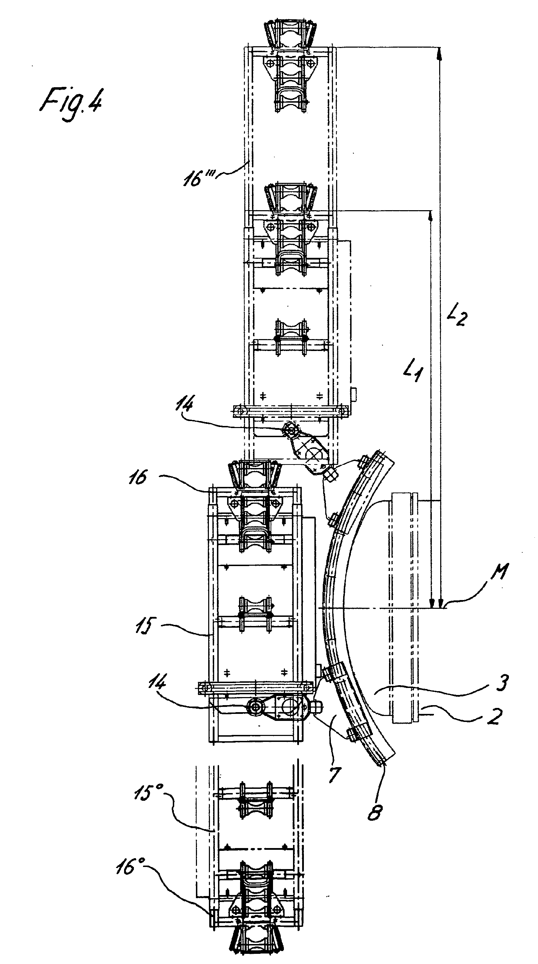

In Figur 4 sind unterschiedliche Positionen des Auslegers 15 gezeigt, der aufgrund der Teleskopierbarkeit des Führungsteiles 16 einen großen Radius abdecken kann. In der ausgefahrenen Position ist das Führungsteil 16'" in einem Abstand L2 von der Fahrzeuglängsebene M angeordnet, während ohne die Teleskopierbarkeit nur ein Abstand L 1 vorhanden ist, wobei die Länge L 1 über zwei Meter und die Länge L2 über drei Meter betragen kann.

Ferner kann der Ausleger 15 für den Transport rückseitig mit einer Mittelebene im Wesentlichen senkrecht zur Fahrzeuglängsebene M angeordnet sein. Hierfür kann der Schlitten 7 entweder in der unteren Position in Figur 4 fixiert sein, oder der Ausleger 15 wird um 180 ° verschwenkt, sodass die Position 15 ° mit dem Führungsteil 16 ° erreicht wird, wobei dann der Schlitten in eine Position oberhalb der Fahrzeuglängsebene M in Figur 4 verfahren werden muss. In beiden Positionen kann der Ausleger 15, 15 ° fixiert werden, beispielsweise über eine Lamellenbremse an dem Motor des Schwenkantriebes.

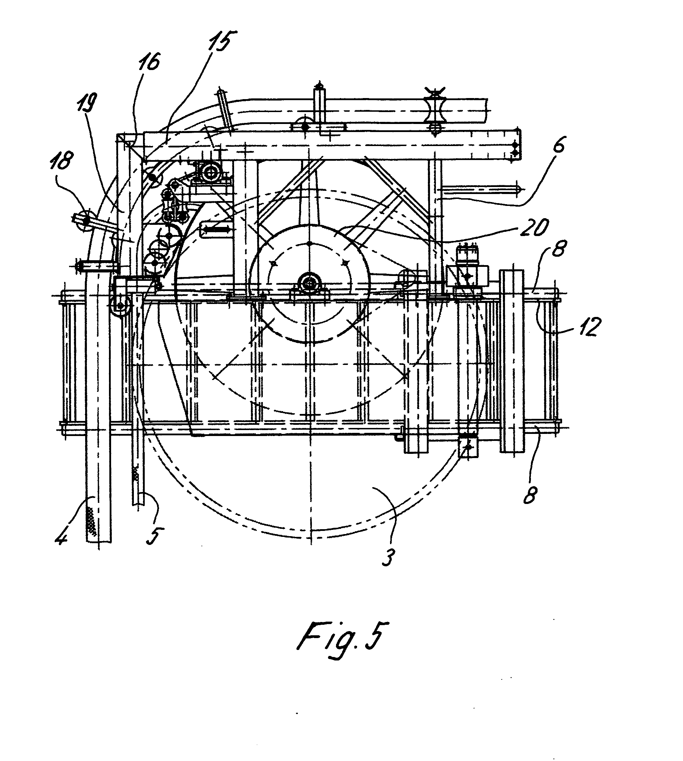

In Figur 5 ist das Gestell 6 des Auslegers 15 in einer Rückansicht gezeigt, wobei die parallel geführten Schläuche 4 und 5 von einem nach unten ragenden Holm 19 des Führungsteils 16 nach unten hängen. Der Saugschlauch 4 und der Spülschlauch 5 sind dabei über Rollen 18 geführt, die zur Abwicklung und Aufwicklung auch angetrieben sein können.

An dem Gestell 6 ist ferner eine Haspel 20 für den Spülschlauch 5 vorgesehen, sodass der Spülschlauch 5 auf der Haspel 20 auf- und abwickelbar ist. Die Haspel 20 wird daher zusammen mit dem Ausleger 15 verschwenkt und über den Schlitten 7 verfahren.

In dem dargestellten Ausführungsbeispiel erfolgt die Führung des Schlittens 7 über Gleitschuhe 10, wobei natürlich auch Rollen vorgesehen sein können, um eine entsprechende Verfahrbarkeit des Schlittens 7 gegenüber den gebogenen Schienen 8 zu gewährleisten.

## Patentansprüche

1. Saug-Spülfahrzeug (1), insbesondere zur Kanalreinigung, mit einem Saugschlauch (4) zum Fördern von Verunreinigungen in einen Behälter (2) und einem Spülschlauch (5) zum Einspritzen eines Fluides und Lösen der Verunreinigungen, wobei rückseitig an dem Fahrzeug ein Ausleger (15) zur Führung des Saugschlauches (4) und des Spülschlauches (5) vorgesehen ist, der sich um eine vertikale Achse (14) verschwenken lässt, **dadurch gekennzeichnet, dass** der Ausleger (15) an einem Schlitten (7) entlang bogenförmiger Schienen (8) verfahrbar ist und einen Schwenkbereich von über 180° besitzt.

2. Saug-Spülfahrzeug nach Anspruch 1, **dadurch gekennzeichnet, dass** der Schwenkbereich des Auslegers (15) größer als 220° ist.

3. Saug-Spülfahrzeug nach Anspruch 1 oder 2, **dadurch gekennzeichnet, dass** die bogenförmigen Schienen (80) über einen Winkel von über 30° vorzugsweise über 60° erstrecken.

4. Saug-Spülfahrzeug nach einem der Ansprüche 1 bis 3, **dadurch gekennzeichnet, dass** die vertikale Achse (14) im Bereich einer Mittelebene des Auslegers (15) angeordnet ist.

5. Saug-Spülfahrzeug nach einem der Ansprüche 1 bis 4, **dadurch gekennzeichnet, dass** an dem Ausleger (15) ein Antrieb vorgesehen ist, mittels dem der Schlitten (7) entlang der Schiene (8) verfahrbar ist.

6. Saug-Spülfahrzeug nach Anspruch 5, **dadurch gekennzeichnet, dass** benachbart zu einer Schiene (8) eine gebogene Zahnstange (12) fixiert ist, in die ein antreibbares Zahnrad des Schlittens (7) eingreift.

7. Saug-Spülfahrzeug nach einem der Ansprüche 1 bis 6, **dadurch gekennzeichnet, dass** der Schlitten (7) über eine Gleitführung (10) an den Schienen (8) bewegbar ist.

8. Saug-Spülfahrzeug nach einem der Ansprüche 1 bis 7, **dadurch gekennzeichnet, dass** der Ausleger (15) für den Transport im Wesentlichen senkrecht zu einer Fahrzeuglängsebene (M) fixierbar ist, wobei die vertikale Achse (14) des Schlittens (7) wahlweise auf einer Seite der Fahrzeuglängsebene (M) angeordnet ist.

9. Saug-Spülfahrzeug nach einem der Ansprüche 1 bis 8, **dadurch gekennzeichnet, dass** die Fixierung des Auslegers (15) für den Transport über eine in einem Motor des Schwenkantriebes integrierte Lamellenbremse erfolgt.

10. Saug-Spülfahrzeug nach einem der Ansprüche 1 bis 9, **dadurch gekennzeichnet, dass** an dem Ausleger (15) eine Haspel (20) zum Aufwickeln des Spülschlauches (5) montiert ist.

11. Saug-Spülfahrzeug nach einem der Ansprüche 1 bis 10, **dadurch gekennzeichnet, dass** der Ausleger (15) teleskopierbar ist und ein ausfahrbares Führungsteil besitzt.

## Claims

1. Suction/flushing vehicle (1), in particular for sewer cleaning, with a suction hose (4) for conveying dirty matter into a tank (2) and a flushing hose (5) for injecting a fluid and releasing the dirty matter, wherein a boom (15) for guiding the suction hose (4) and the flushing hose (5) is provided on the rear side of the vehicle and can pivot about a vertical axis (14), **characterized in that** the boom (15) can be displaced on a carriage (7) along curved rails (8) and has a pivoting range of above 180°.

2. Suction/flushing vehicle according to Claim 1, **characterized in that** the pivoting range of the boom (15) is greater than 220°.

3. Suction/flushing vehicle according to Claim 1 or 2, **characterized in that** the curved rails (80) extend over an angle of above 30°, preferably above 60°.

4. Suction/flushing vehicle according to one of Claims 1 to 3, **characterized in that** the vertical axis (14) is arranged in the region of a mid-plane of the boom (15).

5. Suction/flushing vehicle according to one of Claims 1 to 4, **characterized in that** a drive is provided on the boom (15), by means of which drive the carriage (7) can be displaced along the rail (8).

6. Suction/flushing vehicle according to Claim 5, **characterized in that** a curved rack (12) into which a driveable pinion of the carriage (7) engages is fastened adjacent to a rail (8).

7. Suction/flushing vehicle according to one of Claims 1 to 6, **characterized in that** the carriage (7) can be moved on the rails (8) via a sliding guide (10).

8. Suction/flushing vehicle according to one of Claims 1 to 7, **characterized in that** for transportation the boom (15) can be fastened substantially perpendicular to a vehicle longitudinal plane (M), wherein the vertical axis (14) of the carriage (7) is selectively arranged on one side of the vehicle longitudinal plane (M).

9. Suction/flushing vehicle according to one of Claims 1 to 8, **characterized in that** for transportation the boom (15) is fastened via a multi-disc brake integrated in a motor of the pivoting drive.

10. Suction/flushing vehicle according to one of Claims 1 to 9, **characterized in that** a winch (20) for winding up the flushing hose (5) is mounted on the boom (15).

11. Suction/flushing vehicle according to one of Claims 1 to 10, **characterized in that** the boom (15) is telescopic and has an extendable guide part.

## Revendications

1. Véhicule aspirateur, en particulier pour le nettoyage des canaux, comportant un tube aspirateur (4) pour transporter les matières boueuses dans une contenant (2) et un tube de nettoyage (5) pour injecter un liquide et dissoudre les matières boueuses, un bras (15), apte à pivoter autour d'un axe vertical (14), étant prévu à l'arrière du véhicule pour le guidage du tube aspirateur (4) et du tube de nettoyage (5), **caractérisé en ce que** le bras (15) est mobile sur un chariot (7) le long de rails (8) courbes et possède une plage de pivotement supérieure à 180°.

2. Véhicule aspirateur selon la revendication 1, **caractérisé en ce que** la plage de pivotement du bras (15) est supérieure à 220°.

3. Véhicule aspirateur selon la revendication 1 ou 2, **caractérisé en ce que** les rails (8) courbes s'étendent sur un angle de plus de 30°, de préférence de plus de 60°.

4. Véhicule aspirateur selon l'une quelconque des revendications 1 à 3, **caractérisé en ce que** l'axe vertical (14) est disposé dans la zone d'un plan médian du bras (15).

5. Véhicule aspirateur selon l'une quelconque des revendications 1 à 4, **caractérisé en ce que** sur le bras (15) est prévu un système d'entraînement, au moyen duquel le chariot (7) peut se déplacer le long des rails (8).

6. Véhicule aspirateur selon la revendication 5, **caractérisé en ce qu'**une crémaillère (12) courbe, dans laquelle engrène une roue dentée actionnable du chariot (7), est fixée adjacente à un rail (8).

7. Véhicule aspirateur selon l'une quelconque des revendications 1 à 6, **caractérisé en ce que** le chariot (7) est apte à se déplacer sur les rails (8) par l'intermédiaire d'un guidage à glissement (10).

8. Véhicule aspirateur selon l'une quelconque des revendications 1 à 7, **caractérisé en ce que**, pour le transport, le bras (15) peut être fixé sensiblement perpendiculairement à un plan longitudinal (M) du véhicule, l'axe vertical (14) du chariot (7) étant disposé au choix sur un côté du plan longitudinal (M) du véhicule.

9. Véhicule aspirateur selon l'une quelconque des revendications 1 à 8, **caractérisé en ce que** la fixation du bras (15) en vue du transport est assurée par l'intermédiaire d'un frein à lamelles intégré dans un moteur du système d'entraînement en pivotement.

10. Véhicule aspirateur selon l'une quelconque des revendications 1 à 9, **caractérisé en ce qu'**un treuil (20) pour l'enroulement du tube aspirateur (5) est monté sur le bras (15).

11. Véhicule aspirateur selon l'une quelconque des revendications 1 à 10, **caractérisé en ce que** le bras (15) est un bras télescopique et possède une partie de guidage extractible.
